# EUROPÄISCHE PATENTANMELDUNG

(11) **EP 0 905 012 A2**
(43) Veröffentlichungstag der Anmeldung: **31.03.1999**
(21) Anmeldenummer: 98115779.5
(22) Anmeldetag: 21.08.1998
(51) Int. Cl.: B62H 3/02

(54) **Fahrradständer**

(30) Priorität: 26.09.1997 DE 29717209 U
(71) Anmelder: EISEN- UND DRAHTWERK ERLAU AKTIENGESELLSCHAFT, D-73431 Aalen (DE)
(72) Erfinder: Müller, Anton, 73432 Unterkochen (DE)
(74) Vertreter: Jackisch-Kohl, Anna-Katharina

(57) **Zusammenfassung**

Der Fahrradständer (1) hat ein Standbein (8), auf dem auf beiden Seiten jeweils ein Halter (12,13) für die Fahrräder vorgesehen ist. Sie sind in Höhen- und/oder Längsrichtung des Standbeines (8) versetzt zueinander angeordnet. Um den Fahrradständer so auszubilden, daß die am Ständer (1) geparkten Fahrräder mit geringstmöglichem Platzbedarf geparkt werden können, sind die Halter (12,13) derart versetzt zueinander angeordnet, daß die Hinterräder der am Fahrradständer (1) geparkten Fahrräder auf gleicher Höhe liegen. Bei entsprechend schräger Anordnung des Fahrradständers (1) kann in Reihe nebeneinander eine Vielzahl von Fahrrädern geparkt werden, wobei ihre Vorder- und Hinterräder auf gleicher Höhe liegen. Dadurch läßt sich eine Vielzahl von Fahrradständern (1) auf kleinstmöglichem Raum neben- oder hintereinander auf einer Abstellfläche unterbringen. Der Fahrradständer (1) eignet sich daher besonders für Eisenbahnwaggons.

## Beschreibung

Die Erfindung betrifft einen Fahrradständer nach dem Oberbegriff des Anspruches 1.

Bei einem bekannten Fahrradständer dieser Art (DE-GM 94 16 533) sind am Standbein zwei Halter vorgesehen, die in Höhen- und/oder Längsrichtung des Standbeines versetzt zueinander liegen. Die Halter sind an Tragarmen vorgesehen, die in unterschiedlichen Höhen am Ständer befestigt sind. Sie ragen in entgegengesetzte Richtungen senkrecht vom Standbein weg. Zwei an einem Ständer geparkte Fahrräder liegen in Einparkrichtung des Ständers so nebeneinander, daß ihre Vorder- und Hinterräder versetzt zueinander liegen. Wenn mehrere solcher Fahrradständer in Reihe nebeneinander angeordnet sind, benötigen die Fahrräder relativ viel Platz.

Der Erfindung liegt die Aufgabe zugrunde, einen Fahrradständer dieser Art so auszubilden, daß die am Ständer geparkten Fahrräder mit geringst möglichem Platzbedarf geparkt werden können.

Diese Aufgabe wird bei einem Fahrradständer der gattungsbildenden Art erfindungsgemäß mit den kennzeichnenden Merkmalen des Anspruches 1 gelöst.

Infolge der erfindungsgemäßen Ausbildung können bei entsprechend schräger Anordnung der Fahrradständer in Reihe nebeneinander eine Vielzahl von Fahrrädern geparkt werden, wobei ihre Vorder- und Hinterräder auf gleicher Höhe liegen. Dadurch läßt sich eine Vielzahl von Fahrradständern auf kleinst möglichem Raum neben- oder hintereinander auf einer Abstellfläche unterbringen. Der erfindungsgemäße Fahrradständer eignet sich daher besonders für Eisenbahnwaggons, um dort möglichst viele Fahrräder unterzubringen und transportieren zu können.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt:
- Fig. 1: einen erfindungsgemäßen Fahrradständer in Draufsicht,
- Fig. 2: den Fahrradständer gemäß Fig. 1 in Seitenansicht nach Pfeil 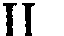 in Fig. 1,
- Fig. 3: den Fahrradständer nach Fig. 1 in Seitenansicht gemäß Pfeil 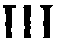 in Fig. 1,
- Fig. 4: in Draufsicht eine Vielzahl erfindungsgemäßer Fahrradständer, die mit Abstand nebeneinander in Reihe angeordnet sind und an denen jeweils zwei Fahrräder geparkt sind.

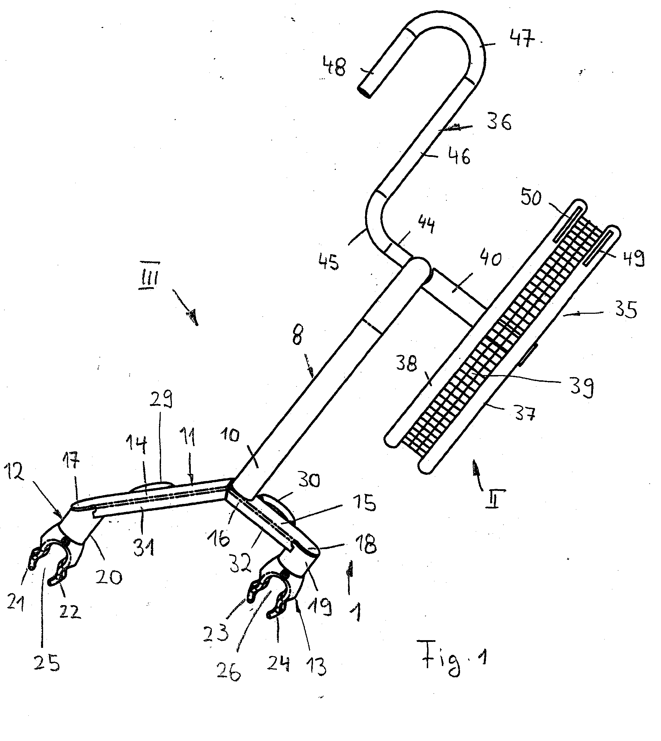

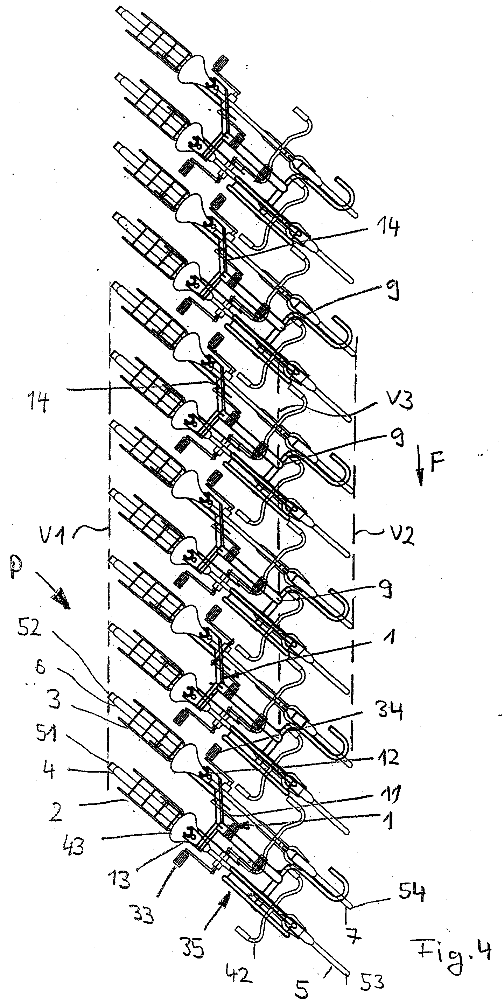

Der Fahrradständer gemäß Fig. 1 dient zum Parken zweier nebeneinander angeordneter Fahrräder 2 und 3 (Fig. 4). Der Fahrradständer 1 kann mit einer Vielzahl gleicher Fahrradständer 1 in Reihe nebeneinander angeordnet werden (Fig. 4). Vorteilhaft ist hierbei, daß die Fahrräder 2, 3 so nebeneinander geparkt werden können (Fig. 4), daß ihre Hinter- und Vorderräder 4, 6 und 5, 7 auf gleicher Höhe hintereinander liegen. Dadurch kann eine Vielzahl von Fahrrädern 2, 3 auf der vorhandenen Parkfläche untergebracht werden. Solche Parkflächen sind beispielsweise in Zügen vorgesehen. Die Fahrräder 1 können aber auch auf öffentlichen Parkplätzen, in Schulhöfen, Sportanlagen und dergleichen zum Parken der Fahrräder 2, 3 angeordnet sein, so daß diese auf kleinstem Raum abgestellt werden können.

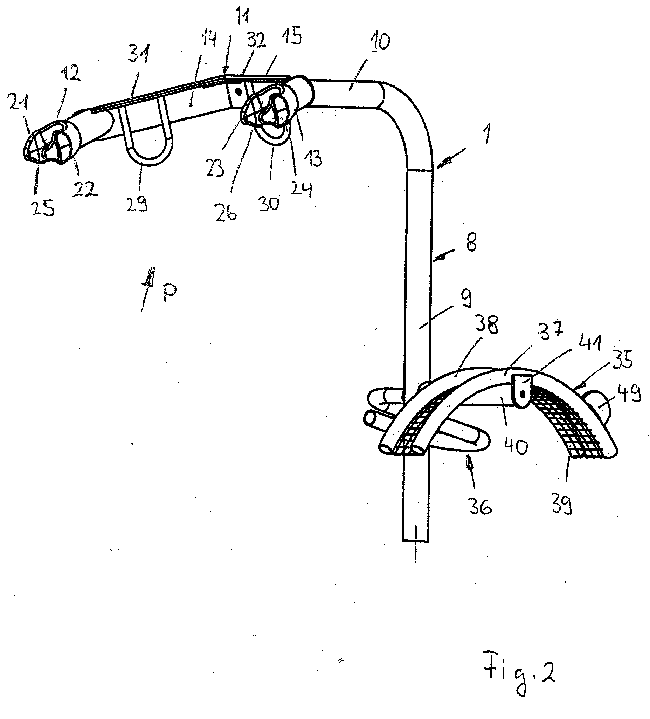

Der Fahrradständer 1 hat in bekannter Weise ein Standbein 8, das als etwa L-förmig gebogenes Rohr ausgebildet ist. Mit seinem längeren Schenkel 9 ist das Standbein 8 am Boden befestigt, vorzugsweise in diesem verankert, während der andere, etwas kürzere Schenkel 10 horizontal verläuft und an seinem Ende einen Träger 11 mit zwei Tragarmen 14, 15 für jeweils einen Halter 12 und 13 aufweist. In den Haltern 12, 13 kann jeweils ein Fahrrad 2, 3 festgeklemmt und gesichert werden. Die Tragarme 14 und 15 stehen quer vom Standbeinschenke 10 ab. Sie sind vorzugsweise leistenartig ausgebildet und schließen einen großen stumpfen Winkel von etwa 120° miteinander ein. Der eine Tragarm 14 ist länger, vorzugsweise etwa doppelt so lang wie der andere Tragarm 15. Er ragt etwa rechtwinklig vom Standbeinschenkel 10 nach außen. Der Tragarm 14 schließt mit dem Standbeinschenkel 10, in Draufsicht gesehen, einen Winkel ein und verläuft von diesem aus vorzugsweise unter einem spitzen Winkel schräg nach unten und entgegen Einparkrichtung P schräg nach vorn (Fig. 1 und 2). Das eine Ende 16 des Standbeinschenkels 10 schließt stumpfwinklig an den Tragarm 15 an. An den freien Enden 17 und 18 der Tragarme 14 und 15 sind die Halter 12 und 13 befestigt. An das freie Ende 18 des Tragarmes 15 schließt der Halter 13 mit einem kurzen Rohrstück 19 senkrecht an. An das freie Ende 17 des Tragarmes 14 schließt der Halter 12 mit einem vorzugsweise gleich ausgebildeten kurzen Rohrstück 20 unter einem stumpfen Winkel an (Fig. 1). Die beiden Rohrstücke 19, 20 liegen, wie Fig. 1 zeigt, parallel zueinander, jedoch in unterschiedlichen Höhen. Das Rohrstück 19 hat größeren Bodenabstand als das Rohrstück 20.

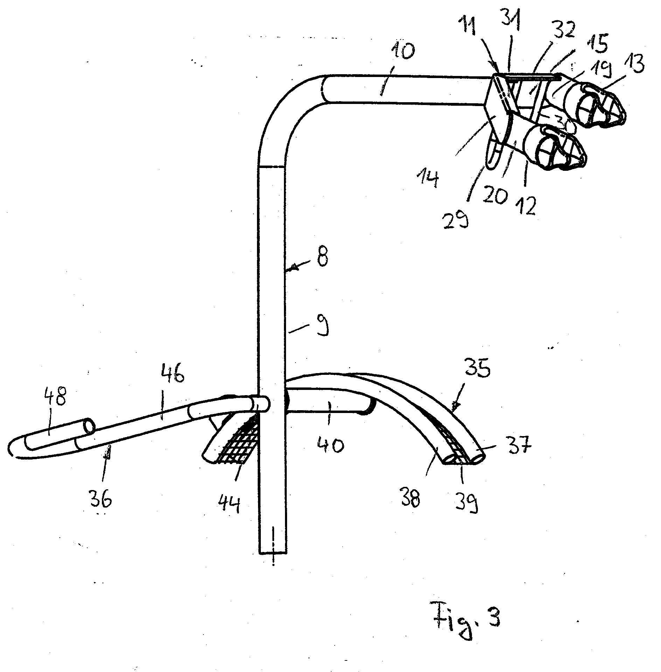

Wie insbesondere die Fig. 2 und 3 zeigen, sind die leistenartigen Tragarme 14 und 15 gegenüber der Stirnfläche des freien Endes 16 des Schenkels 10 von diesem weg nach vorne und unten geneigt. Auf der Oberseite der Tragarme ist jeweils eine Querleiste 31 und 32 befestigt. Die Tragarme 14, 15 mit ihren Querleisten 31, 32 sind, wie die Fig. 2 und 3 zeigen, gegenüber dem Schenkel 10 des Standbeines 8 leicht schräg nach unten geneigt. Die Querleiste 32 des Tragarmes 15 liegt senkrecht zum Standbeinschenkel 10, während die andere Querleiste 31 des Tragarmes 14 mit dem Standbeinschenkel 10 einen stumpfen Winkel einschließt.

Die Halter 12 und 13 sind in an sich bekannter Weise als Klemmteile mit zwei Klemmschenkeln 21, 22 und 23, 24 ausgebildet. Die Halter 12, 13 sind in den Rohrstücken 19 und 20 mit (nicht dargestellten) Steckteilen gesichert. Die einander gegenüberliegenden Klemmschenke 21, 22 und 23, 24 begrenzen eine Klemmöffnung 25 bzw. 26 für ein Mittel- bzw. Sitzrohr der Fahrräder 2, 3. Die Fahrräder 2, 3 werden zum Parken am Fahrradständer 1 in Einparkrichtung P an den Fahrradständer 1 herangeschoben und mit ihrem Mittel- bzw. Sitzrohr in die Klemmöffnungen 25 bzw. 26 eingeschnappt. Die Klemmschenkel 21, 22; 23, 24 werden beim Eindrücken elastisch auseinander gebogen, bis das Mittel- bzw. Sitzrohr in die Klemmöffnung 25, 26 gelangt. Die Klemmschenkel federn dann in Richtung auf ihre Ausgangslage zurück und umschließen das Mittel- bzw. Stützrohr fest. Zum Lösen vom Ständer 1 müssen die Fahrräder 2, 3 in entgegengesetzter Richtung wieder vom Ständer 1 wegbewegt werden, wobei ihr Mittel- bzw. Sitzrohr unter elastischer Verformung der Klemmschenkel aus der Klemmöffnung 25, 26 herausgedrückt wird. Wie die Fig. 1 bis 3 zeigen, liegen die Tragarme 14, 15 mit den Haltern 12, 13 auf verschiedenen Seiten des Standbeines 8 bzw. seines Schenkels 10. Die Halter 12, 13 liegen ferner in unterschiedlichen Höhen des Standbeines 8 versetzt zueinander. Die Halter 12, 13 erstrecken sich in gleicher Richtung wie der Schenke 10. Sie liegen in Einparkrichtung P versetzt und parallel zueinander.

An jedem Tragarm 14, 15 des Trägers 11 ist in bekannter Weise ein Sicherungsteil 29, 30 (Fig. 2, 3) befestigt. Die Sicherungsteile 29, 30 sind vorzugsweise bügelförmig ausgebildet und mit ihren freien Schenkelenden an den Querleisten 31, 32 der Tragarme 14, 15 befestigt. In die Sicherungsteile 29, 30 können beispielsweise eine Sicherungskette, ein Drahtseil, ein Bügelschloß oder dergleichen eingehängt werden, mit denen die Fahrräder 2, 3 am Ständer 1 gegen Diebstahl gesichert werden können.

Der Halter 13 liegt näher beim Schenkelende 16 als der Halter 12 und in einer Ebene oberhalb dieses Halters. Die Anordnung der Halter 12, 13 ist so gewählt, daß bei montiertem Ständer 1 die an ihm geparkten Fahrräder 2, 3 mit ihren Hinterrädern 4, 6 auf gleicher Höhe liegen (Fig. 4). Dadurch können die Fahrräder am Ständer 1 mit geringstem Platzbedarf geparkt werden. Durch die versetzte Anordnung der Halter 12, 13 zueinander wird ferner erreicht, daß sich die Pedale 33, 34 der Fahrräder 2, 3 trotz ihres geringen Abstandes voneinander nicht gegenseitig beeinträchtigen.

In der in Fig. 4 dargestellten Parkstellung , in der die Fahrräder 2, 3 schräg nach oben gekippt sind, stehen sie mit ihren Vorderrädern 5, 7 auf Stützen 35, 36 (Fig. 1 bis 3) auf. Die Stütze 35 ist auf derselben Seite des Standbeines 8 vorgesehen wie der Halter 13 und teilkreisförmig gebogen. Sie hat abgerundete randseitige Rohrbögen 37, 38, zwischen denen als Aufstandsfläche ein entsprechend gekrümmtes Gitter 39 befestigt ist. Die Stütze 35 liegt auf einem senkrecht vom Standbeinschenkel 9 abstehenden Rohrstück 40 auf, an dessen Ende ein aufwärts ragender Anschlag 41 befestigt ist. An ihm liegt der äußere Rohrbogen 37 an. Die Stütze 35 hat einen solchen Abstand vom Boden, daß das Fahrrad 2 in geparkter Stellung mit seinem Vorderrad 5 etwa auf der höchsten Stelle der Standfläche 39 steht. Beim Parken dient die Stütze 35 als Auffahrrampe, wobei der Lenker 42 (Fig. 4) des Fahrrades 2 über den Sattel 43 des benachbarten Fahrrades 3 angehoben wird. Das Gitter 39 der Stütze 35 läßt sich problemlos reinigen. Zwischen den beiden Rohrbögen 37, 38 ist das Rad 5 des Fahrrades 2 gegen Kippen gesichert. Damit die Kippsicherheit des Fahrrades 2 auf der Stütze 35 noch verbessert wird, ist auf beiden Rohrbögen 37 und 38 jeweils ein Anschlag 49 und 50 befestigt, vorzugsweise verschweißt. Die Anschläge 49 und 50 sind gleich ausgebildet und durch etwa teilkreisförmige, plattenartige Flansche gebildet, die senkrecht nach oben über die Rohrbögen 37, 38 vorstehen. Durch die Anschläge 49, 50 ist das Fahrrad 2 auch dann gegen Kippen gesichert, wenn es beispielsweise auf einem Zug transportiert wird, wo relativ hohe Querkräfte wirken, wenn der Zug beispielsweise bremst, anfährt oder durch Kurven fährt.

Die Stütze 36 des Fahrradständers 1 ist, wie insbesondere Fig. 1 zeigt, als etwa s-förmig gekrümmtes Rohrstück ausgebildet, das mit einem abgewinkelten Schenkelende 44 am Standbeinschenkel 9 befestigt ist. Wie insbesondere Fig. 3 zeigt, liegt die Befestigungsstelle am Standbein 9 etwa auf gleicher Höhe wie die Befestigungsstelle des Rohrstückes 40 für die Stütze 35. Das Schenkelende 44 liegt etwa horizontal und geht über einen gekrümmten Übergangsabschnitt 45 in einen längeren Schenke 46 über. Er ist, wie insbesondere Fig. 3 zeigt, schräg nach unten geneigt und ragt in Einparkrichtung P nach vorn. Der Schenke 46 geht über ein etwa u-förmig gebogenes Bügelteil 47 in ein freies Schenkelende 48 über. Es erstreckt sich entgegen Einparkrichtung P und verläuft parallel bis etwa in Höhe der halben Länge des Schenkels 46. In die Stütze 36 wird das andere Fahrrad 3 mit seinem Vorderrad 7 gestellt, wobei das Vorderrad auf dem Bügelteil 47 aufliegt. Es liegt in Höhenrichtung des Standbeines 8 unterhalb der Aufstandsfläche der Stütze 35, so daß auch das Rad 7 des Fahrrades 3 tiefer liegt als das Vorderrad des Fahrrades 2. Die Stütze 36 hat ebenso wie die Stütze 35 Abstand vom Boden.

Wie Fig. 4 zeigt, wird auf einer Ladefläche eines Zuges, wo nur wenig Platz zur Verfügung steht, eine Vielzahl von Ständern 1 in Reihe parallel hintereinander schräg zur Fahrtrichtung F des Zuges angeordnet. Die Ständer 1 haben jeweils etwa gleichen Abstand voneinander, der etwas größer ist als die maximale Breite der Lenker 42 der Fahrräder 2, 3. Die vorderen und hinteren Ränder 51, 52 und 53, 54 der Fahrräder 2, 3 liegen jeweils auf einer gemeinsamen Vertikalebene V1, V2. Die beiden Vertikalebenen V1, V2 liegen parallel zueinander und erstrecken sich in Fahrtrichtung F. Der Abstand der beiden Vertikalebenen V1, V2 ist kleiner als die Länge der Fahrräder. Auch die Standbeine 8 bzw. ihre vertikalen Schenkel 9 liegen in einer gemeinsamen Vertikalebene V3 (Fig. 4), die im Bereich zwischen den beiden Vertikalebenen V1, V2 liegt. Die Ständer 1 sind außerdem so angeordnet, daß die Tragarme 14 fluchtend zueinander liegen. Wie Fig. 4 zeigt, erstrecken sich die Tragarme 14 in Fahrtrichtung F bzw. parallel zu den in Fahrtrichtung F sich erstreckenden Vertikalebenen V1 bis V3. Bei einer solchen Anordnung der Ständer 1 ist gewährleistet, daß die Fahrräder 2, 3 auf kleinstem Raum nebeneinander geparkt werden können, ohne sich dabei zu berühren. Dadurch sind die Fahrräder vor Beschädigungen geschützt und können auch leicht geparkt, am Ständer gegen Diebstahl mit den Sicherungsteilen 29, 30 gesichert und wieder vom Ständer 1 abgenommen werden. Solche Reihen von Fahrradständern 1 können in beliebiger Länge und beliebiger Anzahl mit Abstand hintereinander und nebeneinander angeordnet werden.

## Patentansprüche

1. Fahrradständer mit einem Standbein, an dem auf beiden Seiten jeweils mindestens ein Halter für die Fahrräder vorgesehen ist, die in Höhen- und/oder Längsrichtung des Standbeines versetzt zueinander angeordnet sind,
dadurch gekennzeichnet, daß die Halter (12, 13) derart versetzt zueinander angeordnet sind, daß die Hinterräder (4, 6) der am Fahrradständer (1) geparkten Fahrräder (2, 3) auf gleicher Höhe liegen.

2. Ständer, bei dem die Halter an insbesondere unterschiedlich langen Tragarmen eines Trägers befestigt sind, nach Anspruch 1,
dadurch gekennzeichnet, daß die Tragarme (14, 15) winklig zueinander liegen und vorzugsweise in Draufsicht auf den Ständer (1) einen stumpfen Winkel, vorzugsweise einen Winkel von etwa 120°, einschließen.

3. Ständer nach Anspruch 2,
dadurch gekennzeichnet, daß mindestens der eine, vorzugsweise der längere Tragarm (14), von einem etwa horizontal verlaufenden Standbeinschenkel (10) aus schräg nach unten und vorne geneigt ist.

4. Ständer nach einem der Ansprüche 1 bis 3,
dadurch gekennzeichnet, daß der andere, vorzugsweise der kürzere Tragarm (15), vom horizontalen Standbeinschenkel (10) aus etwa senkrecht nach außen und unten geneigt verläuft.

5. Ständer nach einem der Ansprüche 1 bis 4,
dadurch gekennzeichnet, daß die Tragarme (14, 15) etwa in Höhe der Stirnseite (16) des horizontalen Standbeinschenkels (10) stumpfwinklig aneinander anschließen.

6. Ständer nach einem der Ansprüche 1 bis 5,
dadurch gekennzeichnet, daß die Halter (12, 13) über Verbindungsstücke (19, 20) an den Tragarmen (14, 15) befestigt sind, und daß mindestens das Verbindungsstück (20) des einen, vorzugsweise des mit dem längeren Tragarm (14) verbundenen Halters (13), stumpfwinklig an diesen anschließt.

7. Ständer nach Anspruch 6,
dadurch gekennzeichnet, daß mindestens ein, vorzugsweise beide Verbindungstücke (19, 20) der Halter (12, 13) schräg nach vorne und unten geneigt sind.

8. Ständer nach einem der Ansprüche 1 bis 7,
dadurch gekennzeichnet, daß am Standbein (8) mindestens eine Stütze (35) mit Abstand vom Boden vorgesehen ist, die mindestens eine, vorzugsweise zwei mit Abstand nebeneinander liegende Anschläge (49, 50) für ein Vorderrad (5, 7) des einen geparkten Fahrrades (2) aufweist.

9. Ständer nach Anspruch 8,
dadurch gekennzeichnet, daß die Anschläge (49, 50) auf Rohrbögen (37, 38) befestigt sind, die mit Abstand voneinander an den Seiten der Stütze (35) vorgesehen sind und zwischen denen eine Auflage (39) für das eine Rad des Fahrrades (2, 3) liegt.

10. Ständer nach einem der Ansprüche 1 bis 9,
dadurch gekennzeichnet, daß auf der anderen Seite des Standbeins (8) eine weitere vorteilhaft etwa S-förmig ausgebildete Stütze (36) vorgesehen ist, die vorteilhaft ein vorzugsweise U-förmiges Auflageteil (47) für das Vorderrad (5, 7) des am Ständer (1) geparkten Fahrrades (3) aufweist.

11. Ständer nach Anspruch 10,
dadurch gekennzeichnet, daß die weitere Stütze (36) mit einem horizontal und senkrecht zu einem vertikalen Standbeinschenkel (9) verlaufenden freien Schenkelende (44) am Schenkel (9) befestigt ist, und daß vorzugsweise das freie Schenkelende (44) etwa auf gleicher Höhe liegt wie ein die andere Stütze (35) tragendes Anschlußstück (40).

12. Ständer nach Anspruch 10 oder 11,
dadurch gekennzeichnet, daß die weitere Stütze (36) vorzugsweise mit ihrem Auflageteil (47) über die andere Stütze (35) in Einparkrichtung (P) des Fahrrades (2, 3) nach vorne ragt.

13. Ständer nach einem der Ansprüche 10 bis 12,
dadurch gekennzeichnet, daß das Auflageteil (47) der weiteren Stütze (36) über ein Zwischenstück (46) mit dem Schenkelende (44) verbunden ist, und daß vorzugsweise das Zwischenstück (46) in Einparkrichtung (P) des anderen Fahrrades (3) schräg nach vorne und unten geneigt verläuft.

14. Ständer nach einem der Ansprüche 10 bis 13,
dadurch gekennzeichnet, daß das Auflageteil (47) unterhalb der höchsten Stelle der teilkreisförmig gekrümmten Aufstandsfläche (39) der ersten Stütze (35) liegt.

15. Aus Ständern nach einem der Ansprüche 1 bis 14 errichtete Parkvorrichtung für Fahrräder,
dadurch gekennzeichnet, daß die Ständer (1) der Parkvorrichtung in einer gemeinsamen Ebene (V3) liegen.

16. Parkvorrichtung nach Anspruch 15,
dadurch gekennzeichnet, daß die Ständer (1) derart nebeneinander angeordnet sind, daß die längeren Tragarme (14) der Ständer (1) fluchtend zueinander liegen.

17. Parkvorrichtung nach Anspruch 15 oder 16,
dadurch gekennzeichnet, daß die in den Ständern (1) geparkten Fahrräder (2, 3) mit ihren am weitesten vorstehenden Teilen (51, 52; 53, 54) ihrer Räder jeweils in einer gemeinsamen Vertikalebene (V1, V2) liegen.

18. Parkvorrichtung nach Anspruch 17,
dadurch gekennzeichnet, daß die Vertikalebenen (V1, V2, V3) parallel zueinander liegen.

19. Parkvorrichtung nach Anspruch 17 oder 18,
dadurch gekennzeichnet, daß der Abstand zwischen den Vertikalebenen (V1, V2) kleiner ist als die Länge der Fahrräder (2, 3).
